# FASCICULE DE BREVET EUROPEEN

(11) **EP 0 706 935 B1**
(45) Date de publication et mention de la délivrance du brevet: **30.12.1998**
(21) Numéro de dépôt: 95402251.3
(22) Date de dépôt: 09.10.1995
(51) Int. Cl.: B64C 27/32

(54) **Dispositif de butées de battement, à anneau escamotable de butées hautes, et tête de rotor le comportant**
Schlagbegrenzungs-Anschlagvorrichtung mit oberem einfahrbarem Schlagbegrenzung-Anschlagring und damit ausgerüsteter Rotorkopf
Flapping restrainer device with upper retractable flap stop ring and rotor head equipped with such a device

(30) Priorité: 12.10.1994 FR 9412168
(43) Date de publication de la demande: 17.04.1996
(73) Titulaire: EUROCOPTER, F-13725 Marignane Cédex (FR)
(72) Inventeur: Commelin, Sylvie, Jacqueline, F-13620 Carry le Rouet (FR); Mondet, Jean Joseph, F-13330 Pelissanne (FR)
(74) Mandataire: Bérogin, Francis

(56) Documents cités:
- EP-A- 0 360 688
- GB-A- 2 028 749
- US-A- 2 717 653

## Description

L'invention concerne un dispositif de butées de battement, pour un rotor principal de giravion tel qu'un hélicoptère, et se rapporte plus particulièrement à un dispositif à butées hautes de battement escamotables en vol, pour un rotor principal de type articulé de tout hélicoptère, et en particulier d'un hélicoptère de tonnage élevé, dont chaque rotor principal est équipé de pales de masse élevée et de grandes dimensions.

Le dispositif de butées de battement selon l'invention est plus spécialement, bien que non exclusivement, destiné à l'équipement d'hélicoptères lourds, dont les pales de chaque rotor principal doivent pouvoir être repliées, et mis en oeuvre dans des conditions opérationnelles leur faisant rencontrer des vents forts et en rafales, comme cela est le cas des hélicoptères lourds embarqués sur des navires de surface, sur les ponts desquels les pales des rotors principaux doivent être manoeuvrées au repliage comme au déploiement, automatique ou manuel, alors que les navires sont en mouvement.

Afin de limiter le débattement angulaire ou fléchissement vers le bas des masses battantes, se composant chacune principalement d'une pale, d'une partie d'attache de la pale au moyeu, tel qu'un manchon, ainsi que de diverses autres pièces nécessaires au fonctionnement, telles que broches et leviers de pas, sur des rotors principaux articulés d'hélicoptères, sous l'effet du poids propre des masses battantes, aux faibles vitesses de rotation et à l'arrêt des rotors, les têtes de rotor sont généralement équipées de butées de battement dites "butées basses", et de nombreuses réalisations différentes de dispositifs de butées basses ont déjà été proposées.

Dans une réalisation bien connue et particulièrement appréciée en raison de ses avantages aux plans de la simplicité et du faible coût de la structure, et de la grande sécurité et fiabilité du fonctionnement, le dispositif comprend une butée de battement basse et centrale, commune à toutes les pales, et comportant un anneau rigide dit "réciproque", monté mobile radialement par rapport au mât rotor, et contre lequel prennent appui, à l'arrêt ou aux faibles vitesses de rotation du rotor, les pistes de butée de patins d'appui inférieurs rigides, dont chacun est solidaire d'une partie inférieure du pied d'une pale ou d'un organe de liaison de la pale au moyeu du rotor.

Lorsque le rotor tourne au sol à une vitesse supérieure à un seuil donné, correspondant à une vitesse suffisante pour permettre un contrôle efficace du rotor par les commandes de vol, ou, en vol, par exemple lorsqu'il tourne à sa vitesse nominale, l'anneau réciproque déplaçable latéralement permet l'inclinaison du disque du rotor par la commande de pas cyclique, car la pale passant dans la position la plus basse dans sa rotation autour de l'axe du rotor repousse l'anneau réciproque du côté opposé vers une pale passant en position la plus haute, de sorte que l'anneau réciproque peut se déplacer latéralement sans s'opposer aux mouvements des pales.

Rotor arrêté, l'anneau réciproque permet également la commande en pas des pales pour contrôler le libre débattement de la commande de pas, car la commande d'un changement du pas des pales en appui sur l'anneau réciproque par leur patin d'appui inférieur provoque l'entraînement de l'anneau réciproque sur une petite rotation par les pales avec un léger glissement des surfaces d'appui.

Cependant, un dispositif de butées basses de battement à anneau réciproque, tel que décrit par exemple en référence aux figures 3 et 5 du brevet FR 2 427 251, présente un inconvénient lorsqu'une rafale de vent par exemple survient pendant les phases critiques de démarrage ou d'arrêt du rotor, alors que la vitesse de rotation est inférieure au seuil précité, et donc que la force centrifuge n'est pas encore suffisamment élevée pour stabiliser les pales dans leur plan de rotation. Dans ces conditions, en effet, la rafale de vent peut repousser l'une des pales fortement vers le bas, de sorte qu'elle s'appuie violemment sur l'anneau réciproque qui, n'étant pas soumis à des efforts de réaction suffisants de la part des autres pales, prend une position radialement décalée extrême, dans laquelle il n'empêche pas la pale violemment repoussée vers le bas d'atteindre une position dangereuse, de forte inclinaison, et de venir éventuellement frapper ou sectionner par son extrémité la poutre de queue ou la cabine de l'hélicoptère. De même, et toujours à l'arrêt ou aux faibles vitesses du rotor, une pale peut être levée par une forte rafale de vent, et prendre un angle de conicité élevé, puis retomber lourdement sur l'anneau réciproque, en détériorant ce dernier et/ou le patin d'appui inférieur de la pale, qui subit elle-même un moment de flexion instantané très supérieur aux charges qu'elle peut normalement encaisser, ce qui peut conduire à sa mise hors service.

D'une manière générale, à partir de la position d'équilibre des masses battantes, dans laquelle il y a équilibre entre les moments statiques des masses battantes et les moments réactionnels de contact des pistes de butées basses sur l'anneau réciproque, libre dans le plan radial par rapport à l'axe du rotor et assurant l'équilibre de l'ensemble en étant soumis aux efforts de contact de toutes les pales (et opposés deux à deux dans un rotor quadripale), si, pour une raison quelconque, une des masses battantes pivote vers le haut, l'équilibre est rompu. L'anneau réciproque, qui est déchargé d'un côté, est chassé sur ce côté par la masse battante opposée, qui, ainsi libérée, pique vers le bas en pivotant autour de son axe de battement. Ce mouvement vers le bas d'une pale fait courir de grands dangers au personnel ainsi qu'à l'hélicoptère et aux matériels voisins.

En plus du vent, les causes pouvant être à l'origine de la rupture de l'équilibre des masses battantes sont les circonstances induisant des efforts sur les masses battantes, telles que les mouvements du navire et/ou la manutention de l'hélicoptère et/ou le repliage ou le déploiement des pales. Lors du repliage d'une pale de l'avant vers l'arrière de l'hélicoptère, l'équilibre se rompt par le passage du centre de gravité de la masse battante correspondante du côté de l'axe de battement de cette pale où se trouve l'axe du rotor, ce qui provoque une inversion de sens de son moment statique, et donc la perte de l'équilibre des masses battantes. La pale opposée à la pale repliée fléchit rapidement vers le bas jusqu'à être arrêtée par une butée de battement en vol, non prévue à cet effet. Au cours du déploiement d'une pale, la perte d'équilibre des masses battantes provoque un basculement inverse de celui précité, et tout aussi dangereux.

Afin de remédier à cet inconvénient, sans renoncer à l'emploi d'une butée basse de battement à anneau réciproque, il a été proposé dans les brevets FR 2 434 079 et FR 2 636 914, un dispositif de butées de battement combinant des butées basses à anneau réciproque et patins inférieurs d'appui des pales, et des butées hautes, limitant les débattements angulaires des pales vers le haut. Dans un tel dispositif, lorsqu'une pale fléchit vers le bas, rotor à l'arrêt ou tournant à faible vitesse, le patin d'appui inférieur de cette pale repousse radialement l'anneau réciproque qui, lui-même, repousse le patin d'appui inférieur de l'une au moins des autres pales du rotor, dans le sens du relèvement. Mais ce relèvement est limité par les butées hautes de battement qui, lorsque le rotor est à l'arrêt ou tourne à faible vitesse, sont toujours en position de travail. Les butées basses coopèrent donc avec les butées hautes de façon à réduire les risques d'endommagement du rotor.

Dans FR 2 434 079, les butées hautes comprennent, pour chaque pale, d'une part un patin d'appui supérieur, solidaire de la pièce d'attache de la pale au moyeu, et d'autre part une butée supérieure portée par le moyeu et escamotable ou éclipsable par l'action de la force centrifuge, à laquelle elle est soumise lorsque le rotor tourne avec une vitesse de rotation supérieure au seuil donné, suffisant pour permettre le contrôle du rotor par les commandes de vol de l'hélicoptère. Cette butée supérieure est un levier coudé pivotant autour d'un axe parallèle à l'axe du rotor, et sollicité par un ressort de rappel de sorte qu'en position "sol", le ressort maintient le levier tel que son premier bras, constituant la butée d'appui proprement dite, soit dans une position d'arrêt du patin d'appui supérieur de la pale correspondante, et que son second bras, portant une masselotte sensible à l'action de la force centrifuge pour faire pivoter le levier à l'encontre du ressort de rappel, est en appui, sur une partie de sa longueur, contre une couronne supportant le pivot du levier coudé. Les deux bras de ce dernier forment un angle tel que la force centrifuge appliquée à la masselotte, lorsque le rotor tourne, tend à surmonter la force de rappel du ressort et à faire pivoter le levier dans un sens tel que son premier bras est éloigné du patin d'appui supérieur en regard sur la pale correspondante.

Dans FR 2 636 914, les butées hautes comportent également, pour chaque pale du rotor, un organe d'appui supérieur solidaire de la partie d'attache de pale au moyeu, et une butée supérieure indépendante, automatiquement escamotable par la force centrifuge, comprenant un levier monté oscillant sur un pivot solidaire du moyeu, et dont un premier bras est conformé en doigt de butée, tandis qu'un second bras porte une masselotte et présente une partie d'appui destinée à venir contre une surface d'appui solidaire du moyeu, ainsi qu'un ressort de rappel, rappelant le levier vers une position "sol" dans laquelle la partie d'appui du second bras du levier repose contre la surface d'appui du moyeu et le doigt de butée du levier est dirigé vers l'organe d'appui supérieur correspondant, de façon à limiter les débattements vers le haut de la pale.

Dans ces deux réalisations connues, les butées portées par le moyeu sont individuelles et propres à chaque pale, de sorte que le dispositif comporte un grand nombre de composants. En outre, dans FR 2 636 914, chaque butée haute pivotante est montée à l'intérieur d'un manchon ou d'une chape d'attache de la pale au moyeu, ce qui pose des problèmes d'accessibilité pour la maintenance.

Dans ces deux réalisations connues, les dispositifs sont appropriés à des rotors principaux d'hélicoptères de faible ou moyen tonnage, et présentent des structures auxquelles sont attachés des risques de rupture de butées hautes et d'escamotages intempestifs lorsqu'elles sont montées sur des rotors d'hélicoptères lourds, si ces réalisations restent compatibles avec les possibilités d'encombrement, de complexité et de masses admissibles sur de tels rotors.

En particulier, un escamotage intempestif ou une rupture de butée haute, pouvant être également à l'origine d'une perte d'équilibre des masses battantes, peut résulter non seulement des efforts anormaux évoqués ci-dessus, via les masses battantes, mais également d'efforts tels que délivrés par des manoeuvres du manche pendant un repliage manuel d'une pale, ou une sollicitation inertielle sur une masselotte d'escamotage en cas de choc vertical, du type saut de marche, lorsque, comme dans FR 2 636 914, la butée haute pivote autour d'un axe perpendiculaire à l'axe du rotor.

Le problème à la base de l'invention est donc de remédier à ces inconvénients et de proposer un dispositif de butées de battement à butées hautes escamotables en vol et adapté aux rotors principaux équipés de pales lourdes de grandes dimensions.

Un but de l'invention est donc de proposer un dispositif de butées de battement qui, tout en conservant les propriétés classiques des butées hautes escamotables en vol (c'est-à-dire limitant, au sol, le battement vers le haut des masses battantes, pouvant provenir de rafales de vent ou bien de chocs pendant la manutention de l'hélicoptère, et, en vol, libérant les masses battantes afin d'autoriser, en battement, tout le domaine de vol des pales), procure, en position "sol", un jeu minimum en battement, ainsi qu'une grande rigidité au contact, avec ou sans choc, pour encaisser les efforts considérables des masses battantes sur le moyeu, et en évitant tout escamotage intempestif.

Un but complémentaire de l'invention est de proposer un dispositif de butées de battement à butées hautes escamotables et qui soit insensible à l'effort inertiel vertical des masselottes, ainsi qu'aux manoeuvres de manche pendant un repliage manuel des pales, en position "sol", et qui, en position "vol", assure un escamotage rapide, un bon équilibre dynamique, une sécurité totale en cas de rupture d'un ou plusieurs ressorts de rappel, ainsi qu'une insensibilité au givrage. Au plan général, le dispositif de butées de battement doit être d'un encombrement réduit, d'une masse réduite et ne comporter que peu de composants.

Un autre but encore de l'invention est de proposer un dispositif à butées hautes de battement escamotables coopérant avantageusement avec une butée basse de battement à anneau réciproque pour constituer simultanément des butées mixtes de battement et de traînée.

A cet effet, le dispositif de butées de battement selon l'invention, du type connu par FR 2 434 079, pour un rotor principal de giravion dont chaque pale est rattachée au moyeu du rotor par une partie d'attache reliée au moyeu par des moyens de retenue et d'articulation, et comportant, pour chaque pale, une butée haute montée mobile sur le moyeu et rappelée par des moyens élastiques en position "sol", dans laquelle chaque butée haute est directement en regard et espacée d'un faible jeu d'une piste de butée d'un patin d'appui supérieur monté sur la partie d'attache de la pale correspondante, pour limiter les battements vers le haut de la pale par contact de la piste de butée de son patin d'appui supérieur contre la butée haute correspondante aux vitesses de rotation du rotor nulle et inférieures à un seuil, correspondant à une vitesse suffisante pour permettre le contrôle du rotor par les commandes de vol du giravion, et au moins une masselotte montée pivotante sur le moyeu autour d'un axe sensiblement parallèle à l'axe du rotor, et mécaniquement reliée à au moins une butée haute, de sorte qu'aux vitesses de rotation du rotor supérieures au seuil, chaque masselotte est écartée de l'axe du rotor sous l'effet de la force centrifuge qui la sollicite, et les butées hautes sont escamotées, à l'encontre des moyens élastiques de rappel, dans une position "vol" telle qu'elles ne sont plus en regard des patins d'appui supérieurs des pales, qui ne sont plus limitées en battement vers le haut par les butées hautes, se caractérise en ce que les butées hautes sont chacune en saillie vers l'extérieur sur un anneau commun sensiblement coaxial au moyeu et monté rotatif autour de l'axe du rotor sur une partie supérieure du moyeu, et chaque masselotte est mécaniquement reliée à l'anneau par des moyens d'entraînement de l'anneau en rotation autour de l'axe du rotor, de la position "sol" à la position "vol" des butées hautes, lorsqu'elle est écartée de cet axe par la force centrifuge, et à l'encontre des moyens élastiques de rappel, qui tendent à rappeler l'anneau en position "sol" des butées hautes et chaque masselotte vers l'axe du rotor. Avantageusement de plus, les butées hautes sont constituées par des proéminences, en nombre égal aux pales, présentées en saillie par l'anneau rotatif et d'une seule pièce avec lui. On réalise ainsi des butées hautes de battement d'une grande rigidité et d'une grande résistance, d'une structure simple et économique, comportant peu de pièces puisque d'une structure monobloc pour l'essentiel, et d'un encombrement limité dégageant un grand volume libre au-dessus du moyeu, disponible pour d'autres systèmes, par exemple de visée ou de dégivrage.

Afin de respecter l'équilibre dynamique du rotor, le dispositif comprend au moins deux masselottes qui, ainsi que les moyens d'entraînement mécaniques de l'anneau rotatif par les masselottes et les moyens de rappel élastique de l'anneau et des masselottes, sont symétriques par rapport à l'axe du rotor.

Pour assurer la bonne disposition des butées hautes en positions "sol" et "vol", l'anneau rotatif et des moyens de support de l'anneau sur le moyeu présentent avantageusement chacun, d'une part, l'une respectivement de deux premières butées de rotation coopérant en direction circonférentielle pour arrêter la rotation de l'anneau en position "sol" sous l'action des moyens de rappel élastique, et, d'autre part, l'une respectivement de deux secondes butées de rotation coopérant en direction circonférentielle pour arrêter la rotation de l'anneau en position "vol" sous l'action de la force centrifuge sollicitant chaque masselotte.

Les moyens de rappel élastique peuvent, comme dans l'état de la technique, solliciter directement les masselottes, mais, de préférence, ils comprennent au moins un ressort hélicoïdal reliant un point fixe de l'anneau à un point fixe, par rapport au moyeu du rotor, des moyens de support de l'anneau sur le moyeu.

Dans un premier mode de réalisation, les moyens d'entraînement mécanique reliant chaque masselotte à l'anneau rotatif comprennent un pignon ayant un moyeu sur lequel la masselotte est en porte-à-faux et monté pivotant autour d'un axe de pivot lié à des moyens de support de l'anneau sur le moyeu du rotor, le pignon engrenant avec une denture de l'anneau, de sorte que les pivotements de chaque masselotte et du pignon correspondant autour de l'axe de pivot sous l'effet prédominant de la force centrifuge ou des moyens de rappel élastique sont simultanés aux rotations de l'anneau rotatif de la position "sol" vers la position "vol" ou en sens opposé, respectivement.

Selon un autre mode de réalisation, les moyens d'entraînement mécanique comprennent un levier à deux bras articulés l'un sur l'autre par l'une de leurs extrémités, et dont un premier bras, supportant la masselotte à son extrémité opposée, est monté pivotant entre ses extrémités sur un point fixe des moyens de support de l'anneau sur le moyeu, tandis que le second bras est articulé par son extrémité opposée en un point fixe de l'anneau, de sorte qu'à tout pivotement du premier bras, éloignant ou rapprochant la masselotte de l'axe du rotor, il correspond un déplacement du second bras et une rotation de l'anneau sur ses moyens de support sur le moyeu, de la position "sol" vers la position "vol" ou en sens opposé, respectivement. En variante, des genouillères ou des liaisons à câbles peuvent être substituées, pour chaque masselotte, au levier à deux bras articulés.

Selon encore un autre mode de réalisation, avantageux aux plans de la simplicité des moyens et de la fiabilité, les moyens d'entraînement mécanique comprennent une bielle portant la masselotte à une extrémité, et montée pivotante par son extrémité opposée sur un point fixe de l'anneau et coulissante entre ses extrémités dans des moyens de liaison glissante et pivotante à un point fixe des moyens de support de l'anneau sur le moyeu, de sorte que tout déplacement de la masselotte sous l'effet de la force centrifuge ou des moyens de rappel élastique entraîne, par traction sur la bielle coulissante et pivotante, une rotation de l'anneau de la position "sol" vers la position "vol" ou dans le sens opposé, respectivement.

Les moyens de liaison glissante et pivotante peuvent comprendre une rotule, traversée à coulissement par la bielle et retenue à pivotement dans un oeil à rotule desdits moyens de support de l'anneau sur le moyeu, mais, dans une réalisation plus rustique et plus fiable, sans risque de coincement quelles que soient les conditions climatiques, et en particulier insensible au givrage et aux vents de sable, la liaison glissante et pivotante est assurée par une équerre dont une aile présente une lumière oblongue, traversée avec du jeu selon les grand et petit axes de la lumière par la bielle passant entre deux cylindres parallèles entre eux et au petit axe de la lumière et retenus d'une part sur l'autre aile de l'équerre et d'autre part sur une patte de fixation desdits moyens de support de l'anneau sur le moyeu, ladite patte de fixation étant sensiblement plane et parallèle à l'autre aile de l'équerre, et la bielle passant également avec du jeu entre la patte de fixation et l'autre aile de l'équerre.

Dans cette réalisation, des moyens de rappel élastique comprennent avantageusement, pour chaque masselotte, un ressort hélicoïdal de compression entourant la bielle entre son extrémité pivotant sur l'anneau et lesdits moyens de liaison glissante et pivotante, de manière à prendre appui d'une part sur l'anneau et d'autre part sur ses moyens de support sur le moyeu.

De plus, afin de fonctionner simultanément comme un dispositif de butées de traînée, lorsqu'il est monté sur un rotor articulé dont les moyens de retenue et d'articulation de chaque pale sur le moyeu comprennent une articulation ou butée sphérique lamifiée, le dispositif de butées de battement de l'invention comprend avantageusement de plus un mécanisme de butées basses de battement comportant, pour toutes les pales, une butée inférieure commune du type à anneau réciproque monté radialement mobile autour d'un arbre du rotor, sous le moyeu dont l'arbre est solidaire en rotation, et, pour chaque pale, un patin d'appui inférieur solidaire de la partie d'attache de la pale au moyeu, et présentant une piste de butée par laquelle le patin d'appui inférieur vient en contact avec l'anneau réciproque aux vitesses de rotation nulle et faibles du rotor.

Pour l'équipement des rotors principaux d'hélicoptères lourds, l'invention a également pour objet une tête de rotor du type comprenant un moyeu de rotor solidaire en rotation d'un mât rotor autour d'un axe de rotation du rotor, et auquel chacune des pales du rotor est reliée par une partie d'attache fourchue à deux branches, et par des moyens de retenue et d'articulation sur le moyeu qui comprennent une armature radiale externe fixée sur le moyeu, et une armature radiale interne fixée aux extrémités radiales internes des deux branches de la partie d'attache fourchue correspondante, et qui se caractérise en ce qu'elle comprend un dispositif de butées tel que présenté ci-dessus, et, pour chaque pale, des moyens de retenue et d'articulation comportant une butée lamifiée sphérique intégrée entre les deux armatures correspondantes et logée entre les deux branches de la partie d'attache fourchue correspondante, de sorte que son centre de rotation soit sensiblement situé du côté de l'armature radiale externe, ladite partie d'attache fourchue de chaque pale étant un organe de liaison sensiblement radial, tel qu'un manchon, conformé à son extrémité radiale interne en chape dont les deux branches sont fixées à l'armature radiale interne des moyens de retenue et d'articulation correspondants, et conformé à son extrémité radiale externe en chape de fixation au pied de la pale correspondante par deux axes sensiblement parallèles à l'axe de rotation du rotor, et dont l'un est éventuellement amovible afin de permettre le repliage de la pale par pivotement autour de l'autre axe.

D'autres caractéristiques et avantages de l'invention découleront de la description donnée ci-dessous, à titre non limitatif, d'exemples de réalisation décrits en référence aux dessins annexés sur lesquels :
- la figure 1 est une vue en perspective d'une tête de rotor quadripale avec une seule pale pour la clarté de la représentation et un dispositif de butées de battement hautes et basses en position "sol",
- la figure 2 est une vue schématique et partielle en plan de la tête de rotor de la figure 1,
- la figure 3 est une coupe selon III-III de la figure 2,
- la figure 4 est une vue schématique et partielle en plan, représentant le dispositif de butées en position "vol" sur la tête de rotor des figures 1 à 3,
- les figures 5 et 6 sont des vues analogues à la figure 4 d'un second exemple de dispositif de butées en positions respectivement "sol" et "vol" sur la tête de rotor des figures précédentes,
- les figures 7 et 8 sont des vues analogues respectivement aux figures 5 et 6 pour un troisième exemple de dispositif de butées en positions "sol" et "vol" respectivement,
- la figure 9 est une vue schématique et partielle en plan d'une variante du dispositif de butées des figures 7 et 8 dans une autre tête de rotor,
- la figure 10 est une vue schématique en plan de la variante du dispositif de butées de la figure 9, en position "vol",
- la figure 11 est une vue en perspective d'un sous-ensemble du dispositif de butées des figures 9 et 10, et
- la figure 12 est une vue en coupe transversale du sous-ensemble de la figure 11.

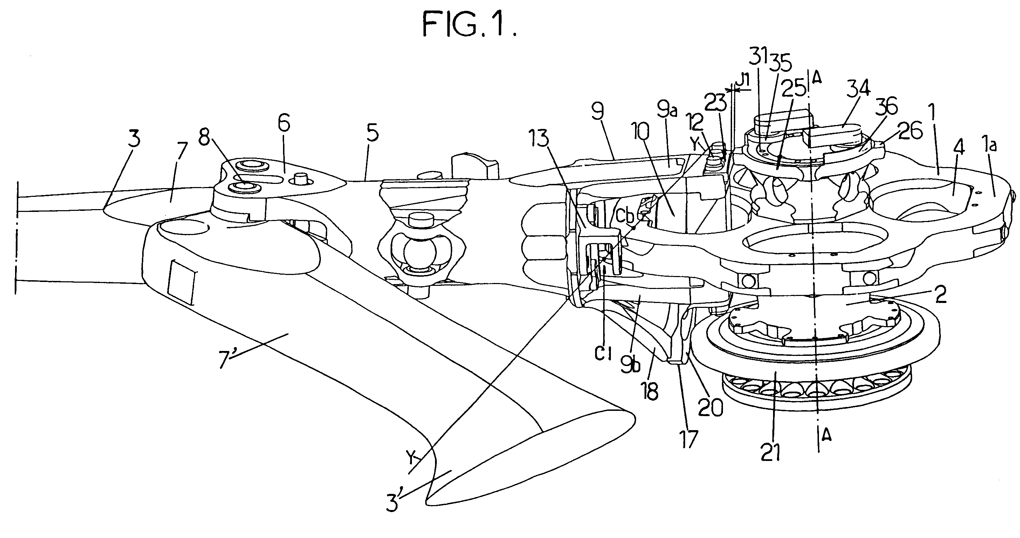

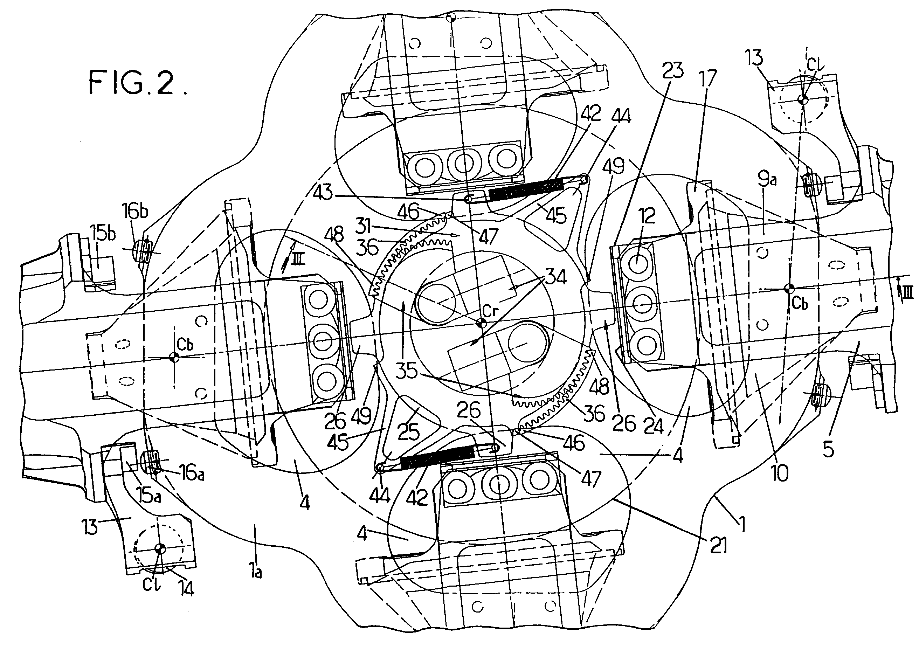

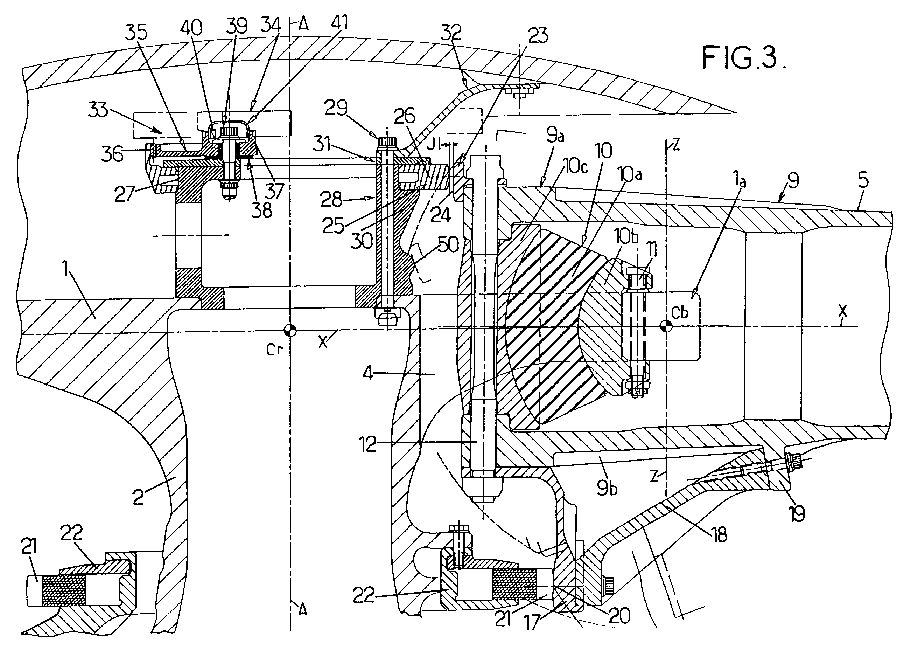

Le rotor dont la tête est représentée sur la figure 1, de type dit "articulé", comprend un moyeu 1 solidaire en rotation d'un mât rotor 2 entraîné en rotation autour de l'axe A-A du rotor. Pour chacune des pales 3 du rotor (quatre pales 3 dans cet exemple, opposées deux à deux), le moyeu 1, sensiblement en forme de plateau ayant autant de renflements la en saillie radiale vers l'extérieur que le rotor comporte de pales 3, présente un évidement axial 4 ménagé, pour partie, dans le renflement la correspondant du moyeu 1. Dans chaque évidement 4, sont logés des moyens de retenue et d'articulation de la pale 3 correspondante sur le moyeu 1, par l'intermédiaire d'un manchon d'attache 5. Ce manchon 5 a son extrémité radiale externe (par rapport à l'axe rotor A-A) aménagée en chape 6 de liaison au pied 7 de la pale 3 correspondante, à l'aide de deux broches telles que 8, parallèles entre elles et à l'axe rotor A-A, et traversant des alésages en regard dans les deux branches parallèles supérieure et inférieure de la chape 6 et dans le pied de pale 7, l'une des broches 8 étant amovible pour permettre le repliage de la pale 3 par pivotement autour de l'autre broche 8, comme représenté en 3' et 7' pour la pale et son pied sur la figure 1. La partie d'extrémité radiale interne du manchon 5 est également aménagée en chape 9 de liaison aux moyens de retenue et d'articulation 10 de la pale 3 sur le moyeu 1, ces moyens 10 étant constitués d'une articulation ou butée lamifiée sphérique de structure bien connue.
Comme visible également sur les figures 2 et 3, la butée lamifiée sphérique 10 comprend une partie centrale 10a, constituée d'un empilement alterné de coupelles rigides et de lames d'un élastomère élastique en forme de calottes sphériques, les lames d'élastomère et les coupelles rigides étant solidarisées les unes aux autres par vulcanisation, et cette partie centrale 10a est adhérisée par sa face radiale externe concave contre la face radiale interne convexe d'une armature radiale externe 10b conformée en étrier chevauchant le bord radial externe de l'évidement 4 correspondant et fixée par des boulons tels que 11 sur le bord du renflement la correspondant du moyeu 1. La partie centrale 10a de la butée lamifiée sphérique 10 est également adhérisée par sa face radiale interne convexe dans un évidement concave de forme correspondante d'une armature radiale interne 10c, montée en entretoises entre les branches supérieure 9a et inférieure 9b de la chape radiale interne 9 du manchon 5, et auxquelles l'armature interne 10c est fixée par trois boulons tels que 12, parallèles à l'axe rotor A-A et s'étendant dans un plan perpendiculaire à l'axe longitudinal X-X de changement de pas de la pale 3 correspondante, lequel axe X-X passe par le centre Cr du rotor, sur l'axe rotor A-A, et par le centre Cb de l'articulation sphérique lamifiée 10, ce centre Cb étant situé dans la partie la du moyeu 1 sur laquelle l'armature externe 10b prend appui.

Pour chaque pale 3, le centre Cb de l'articulation sphérique lamifiée 10 correspondante est le point de concours des axes de pas X-X, de trainée Z-Z, parallèle à l'axe rotor A-A, et de battement Y-Y passant également par le centre Cl d'une articulation (rotule) 14 à l'extrémité du levier de pas 13 boulonné sur le manchon 5, du côté du bord d'attaque de la pale 3 correspondante, et entre les branches 9a et 9b de la chape interne 9. Le levier de pas 13 porte également l'une 15a de deux butées de trainée en vol 15a et 15b, fixées sur le manchon 5 de part et d'autre de l'axe de pas X-X, et venant en appui contre l'une respectivement de deux butées 16a et 16b de trainée en vol, fixées en saillie radiale vers l'extérieur sur le bord du renflement la du moyeu 1, pour limiter, en vol, les débattements angulaires de la pale 3 en trainée vers l'avant ou vers l'arrière, par rapport au sens de rotation du rotor.

Le rotor est équipé de butées basses de battement comprenant, pour chaque pale 3, un talon d'appui inférieur 17 fixé sous la branche inférieure 9b de la chape interne 9 du manchon 5 correspondant par les boulons 12 qui fixent les deux branches 9a et 9b de cette chape sur l'armature interne 10c de l'articulation sphérique lamifiée 10, et ce patin d'appui inférieur 17, sensiblement en forme d'équerre, est rigidifié par une entretoise 18 boulonnée sur l'extrémité inférieure du patin 17 et sur une patte d'ancrage 19 de la branche inférieure 9b. Vers le mât 2, le patin 17 présente une piste de butée basse 20 plane et perpendiculaire à l'axe de pas X-X, par laquelle il vient en appui contre la périphérie d'un anneau réciproque 21, lorsque le rotor est à l'arrêt ou tourne lentement. L'anneau réciproque 21 entoure le mât rotor 2, sous le moyeu 1, et est monté librement mobile dans un plan radial dans un support annulaire 22, de section en U ouvert radialement vers l'extérieur, et fixé au mât 2.

Le rotor étant à l'arrêt, les quatre masses battantes, dont chacune est constituée d'une pale 3, du manchon 5 correspondant avec son levier de pas 13 ainsi que des autres composants portés par la pale 3 et le manchon 5, reposent par les pistes de butée basse 20 contre l'anneau réciproque 21, libre dans un plan radial et assurant l'équilibre de l'ensemble puisque soumis aux quatre efforts de contact opposés deux à deux. Il y a ainsi équilibre entre les moments statiques des masses battantes et les moments réactionnels de contact des pistes de butée basse 20 sur l'anneau réciproque 21.

Pour limiter les battements de chaque pale 3 vers le haut, le manchon 5 est également équipé d'un patin d'appui supérieur 23, fixé sur le dessus de l'extrémité radiale interne de la branche supérieure 9a par les boulons 12 de fixation à l'armature interne 10c de l'articulation 10, et ce patin 23 présente également une piste de butée supérieure 24 qui est plane et perpendiculaire à l'axe de pas X-X.

Pour coopérer avec les pistes de butée haute 24, le moyeu 1 est équipé d'un anneau 25 de butées hautes. Cet anneau 25, massif et d'une grande rigidité, est d'une seule pièce avec des proéminences 26, en saillie radiale vers l'extérieur de l'anneau 25, en nombre égal aux pales 3 et réparties en direction circonférentielle sur le pourtour de l'anneau 25 de sorte que dans une position "sol" (vitesse de rotation inférieure à un seuil), chaque proéminence 26 formant une butée haute soit directement en regard et séparée d'un faible jeu J1 de la piste de butée haute 24 d'une pale 3. Cet anneau 25 est centré sur l'axe rotor A-A, autour duquel il est monté rotatif sur une portée 27 aménagée dans la partie supérieure d'un support 28, de forme générale cylindrique, fixé par des boulons tels que 29 sur le dessus de la partie centrale du moyeu 1. L'anneau 25 est maintenu en regard de la portée 27 et arrêté axialement en translation d'une part par un épaulement 30 du support 28 et d'autre part par une plaque 31 fixée sur le sommet du support 28 par les boulons 29 assurant simultanément la fixation sur la plaque 31 d'un support de coupole 32 pour assurer un capotage aérodynamique et de protection de la partie supérieure de la tête de rotor.

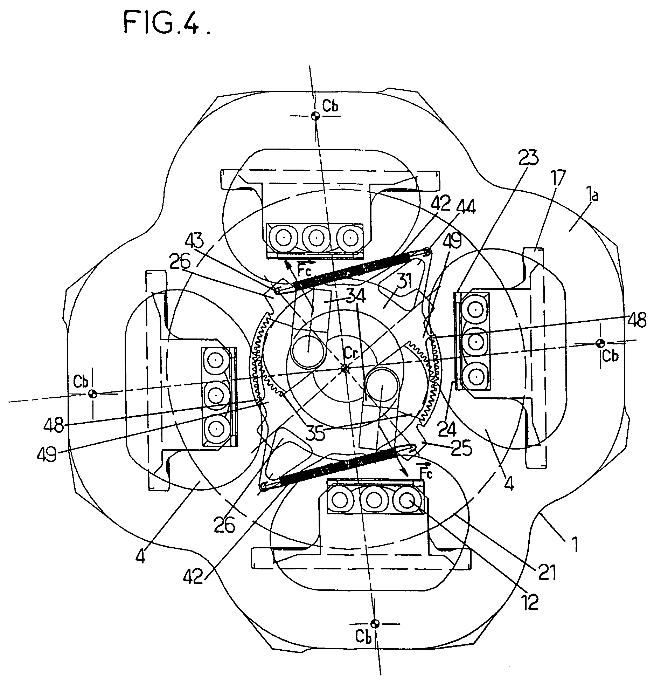

Pour autoriser les battements des pales 3 nécessaires à la conicité du rotor en vol, l'anneau 25 est entraîné en rotation autour de l'axe rotor A-A de façon à escamoter ou éclipser les butées hautes 26, pour que les pistes de butée haute 24 se déplacent chacune entre deux butées hautes 26. Cette rotation de l'anneau 25 est commandée par deux mécanismes d'escamotage, parfaitement symétriques par rapport à l'axe rotor A-A pour assurer l'équilibrage en rotation. Chaque mécanisme d'escamotage 33 comprend une masselotte 34, un pignon 35 et une denture 36 en partie haute sur la périphérie de l'anneau 25. La masselotte 34 est montée en porte-à-faux sur le moyeu 37 du pignon 36, limité à un secteur circulaire, et dont les dents engrènent avec celles de la denture droite 36 tournée vers le centre de l'anneau 25. Par son moyeu 37, le pignon 35 (et donc aussi la masselotte 34) est monté pivotant autour d'un axe parallèle à l'axe rotor A-A sur le support 28 et la plaque 31 à l'aide d'une bague épaulée 38 serrée sur la plaque 31 par un axe de pivot boulonné 39. Le pignon 35 est centré par son moyeu 37 avec du jeu autour de la bague épaulée 38 et arrêté en translation axiale, également avec du jeu, par une rondelle 40 entre la bague épaulée 38 et la tête de l'axe de pivot boulonné 39. La zone de friction entre ce dernier, la bague épaulée 38 et le moyeu 37 du pignon 35 est protégée par un couvercle 41 inséré dans le moyeu 37 du pignon 35. Un ressort hélicoïdal de rappel 42 (voir figure 2) est accroché par une extrémité sur un pion 43 en saillie au-dessus d'une butée haute 26 de l'anneau 25 et par l'autre extrémité sur un pion 44 en saillie au-dessus d'un bras radial ajouré 45 et en saillie vers l'extérieur de la plaque 31. Ce ressort 42 rappelle l'anneau 25 en rotation en position sol, représentée sur les figures 1 à 3, et dans laquelle, pour positionner chaque butée haute 26 de l'anneau 25 avec le faible jeu J1 en face de chaque piste de butée haute 24, le ressort 42 applique la butée de rotation 46, formée par une extrémité de la denture correspondante 36 de l'anneau 25 contre une butée 47 en saillie radiale sur la plaque 31. Dans cette position sol, les pignons 35 et masselottes 34 des deux mécanismes d'escamotage 33 sont tournés de sorte que les deux masselottes 34 sont à proximité de l'axe A-A du rotor et parallèles l'une à l'autre, de part et d'autre de cet axe. Lorsque la vitesse de rotation du rotor dépasse un seuil, correspondant à une vitesse suffisante pour assurer un contrôle efficace du rotor par les commandes de vol, les masselottes 34, soumises à l'action de la force centrifuge, entraînent les pignons 35 en rotation autour des bagues épaulées 38, à l'encontre des ressorts 42 qui sont tendus et chargés, en provoquant, par la coopération des pignons 35 avec les dentures 36 de l'anneau 25, la rotation de ce dernier, comme représenté sur la figure 4, jusqu'à ce que la butée de rotation 48 à l'autre extrémité de chaque denture 36 de l'anneau 25 vienne en contact avec une butée 49 en saillie radiale sur la plaque 31. Dans cette position vol, les butées hautes 26 de l'anneau rotatif 25 sont escamotées par rapport aux pistes de butée haute 24, ce qui autorise les battements des pales 3 autour de leur axe de battement Y-Y sur toute l'enveloppe de vol. Bien entendu, la raideur des ressorts 42 est adaptée, notamment aux masselottes 34, pour obtenir le début et la fin de la course d'escamotage en fonction de valeurs voulues de la vitesse de rotation du rotor.

En vol, si nécessaire, une butée haute de battement solidaire du moyeu 1 et coopérant avec la piste de butée haute 24 d'une pale 3, pour limiter les battements vers le haut de celle-ci à un angle maximum d'environ 20° par exemple, est constituée par un bossage 50 en saillie vers l'extérieur sur le support 28, entre l'épaulement 30 de ce dernier et sa partie inférieure par laquelle il est en appui sur le moyeu 1 (voir figure 3). Les positions relatives des masselottes 34, des pignons 35, de l'anneau 25 et des butées hautes 26, des ressorts 42, de la plaque 31 et des butées 48 et 49 en position vol sont représentées sur la figure 4, sur laquelle on a indiqué par des flèches Fc l'action de la force centrifuge sur les masselottes 34.

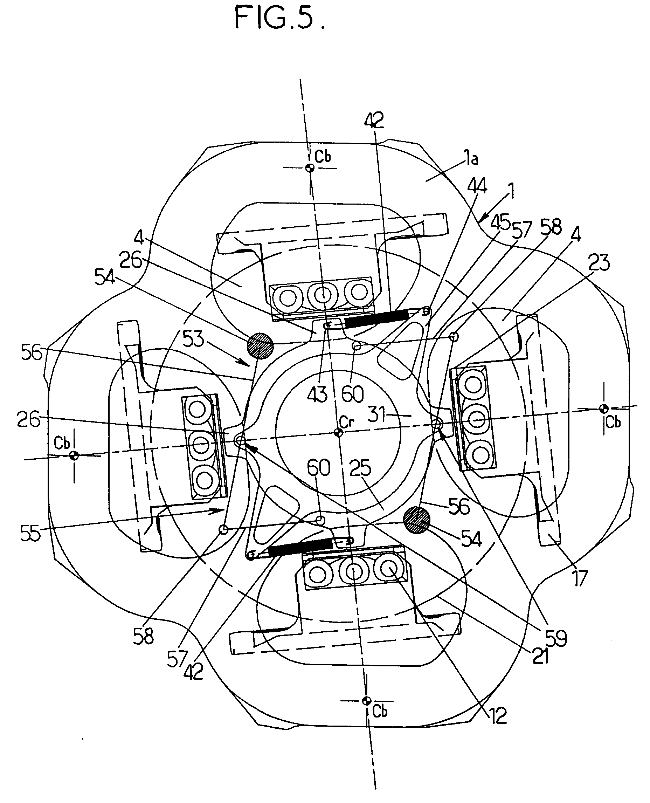

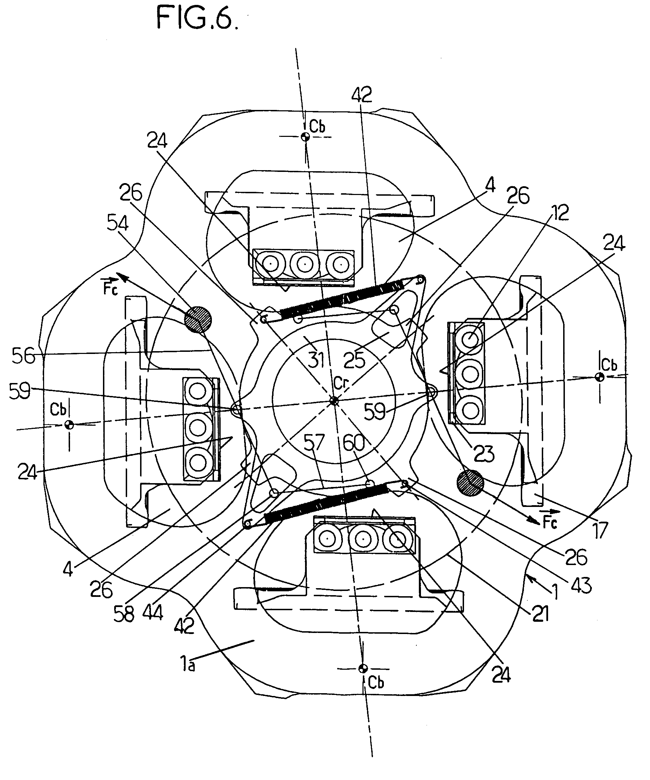

Sur les figures 5 et 6, on a représenté respectivement en positions "sol" et "vol" un dispositif analogue à celui des figures 1 à 4, et qui ne se distingue de ce dernier que par la réalisation des deux mécanismes d'escamotage 53, de sorte que les éléments analogues sont repérés par les mêmes références numériques. En particulier, on retrouve l'anneau rotatif 25 avec ses proéminences formant butées hautes 26 et ses butées de rotation coopérant avec des butées de rotation de la plaque 31, ainsi que les deux ressorts 42 accrochés chacun par ses extrémités d'une part sur un pion 44 d'un bras radial 45 de la plaque 31 et d'autre part sur un pion 43 d'une butée haute 26 de l'anneau rotatif 25. Mais, dans cet exemple, chaque mécanisme d'escamotage 53 comporte une masselotte 54 fixée à une extrémité d'un premier bras 56 d'un levier articulé 55 comprenant un second bras 57 articulé par une extrémité en 58 sur l'autre extrémité du premier bras 56, lequel est monté pivotant dans sa partie centrale autour d'un axe parallèle à l'axe du rotor A-A sur un pivot 59 fixé sur la plaque 31, tandis que la seconde extrémité du second bras 57 est articulée à un point fixe 60 de l'anneau 25.

En position "sol" (figure 5) les masselottes 54 sont à proximité de la périphérie de l'anneau 25 et de la plaque 31 et les deux bras 56 et 57 de chaque levier articulé 55 forment un angle aigu.

En position "vol" (figure 6), sous l'action de la force centrifuge Fc sollicitant chaque masselotte 54, et du fait de la rotation du rotor à une vitesse supérieure au seuil précité, les masselottes 54 sont radialement écartées de l'anneau 25 et de la plaque 31 et ont fait pivoter les premiers bras 56 des leviers 55 autour de leur pivot 59, ce qui fait déplacer les seconds bras 57 dans un sens leur faisant exercer une poussée sensiblement tangentielle sur l'anneau 25 ainsi entraîné en rotation de manière à escamoter ses butées hautes 26, à l'encontre des ressorts 42. Comme dans l'exemple précédent, lorsque la vitesse de rotation du rotor diminue, les ressorts chargés 42 rappellent l'anneau 25 en rotation vers la position "sol", ce qui ramène les masselottes radialement vers l'intérieur, en position initiale, du fait de la liaison mécanique avec l'anneau 25.

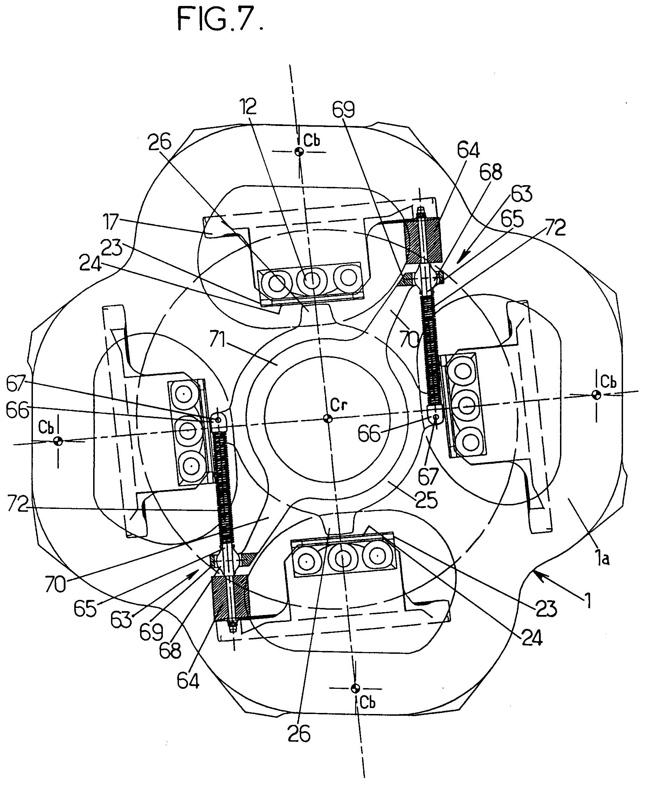

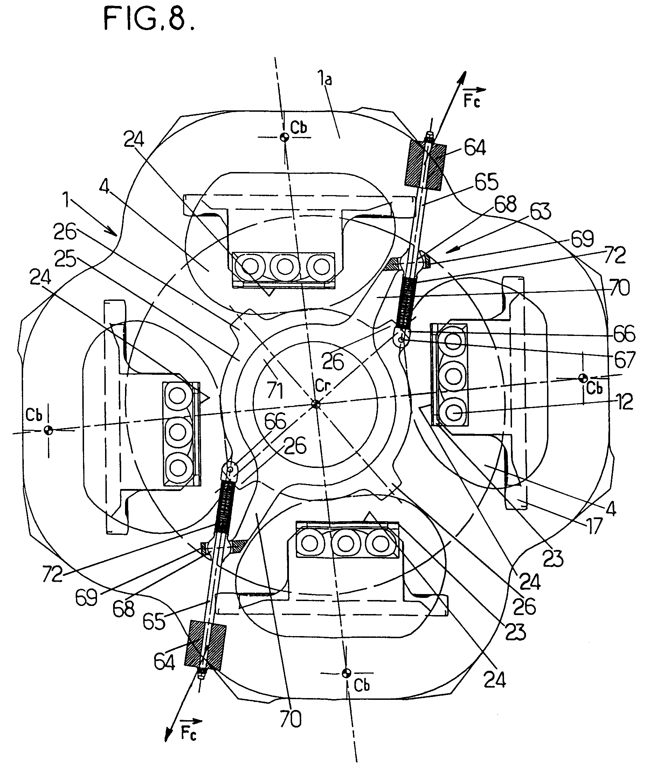

Les figures 7 et 8 représentent, en positions respectivement "sol" et "vol", un troisième exemple de réalisation qui ne se distingue également de ceux des figures déjà décrites que par la réalisation des mécanismes d'escamotage 63. Chacun d'eux comprend une masselotte 64 montée sur une extrémité d'une bielle 65 munie, à son autre extrémité, d'un embout à oeil 66 par lequel elle est montée pivotante autour d'un axe parallèle à l'axe rotor A-A, sur un pivot 67 en saillie sur l'une des butées hautes 26 de l'anneau rotatif 25. Entre la masselotte 64 et l'embout pivotant 66, la bielle 65 traverse de manière coulissante une rotule 68 retenue dans un oeil à rotule 69 solidaire de l'extrémité radiale externe d'un bras radial 70 d'une plaque 71, analogue à la plaque 31 des exemples précédents, pour maintenir l'anneau rotatif 25 sur son support fixé au moyeu 1. De plus, dans cet exemple, chaque ressort de rappel est un ressort hélicoïdal de compression 72 entourant la partie de la bielle 65 s'étendant entre son embout 66 et la rotule 68, contre lesquels il prend appui par ses extémités pour prendre appui contre l'oeil à rotule 69 du bras 70 de la plaque 71 et repousser la bielle coulissante 65 jusqu'à amener la masselotte 64 contre la rotule 68, en position sol (figure 7) pour laquelle chaque butée haute 26 de l'anneau 25 est en regard d'un patin d'appui supérieur 23 d'une pale du rotor.

Sous l'action de la force centrifuge Fc (figure 8), chaque masselotte 64 est écartée radialement vers l'extérieur en exerçant une traction sur la bielle 65 qui coulisse axialement dans la rotule 68, en faisant pivoter cette dernière dans l'oeil à rotule 69, et en comprimant le ressort 72 entre la rotule 68 et l'embout 66, qui est déplacé avec l'anneau 25 en rotation dans un sens le rapprochant de l'oeil à rotule 69, par la traction de la bielle 65, ce qui a pour effet d'escamoter les butées hautes 26 de l'anneau 25 vis-à-vis des patins d'appui supérieur 23. Lorsque la vitesse de rotation du rotor diminue, chaque ressort 72 se détend en repoussant l'embout 66 et la bielle 65 en sens opposé, vers la position sol de la figure 7.

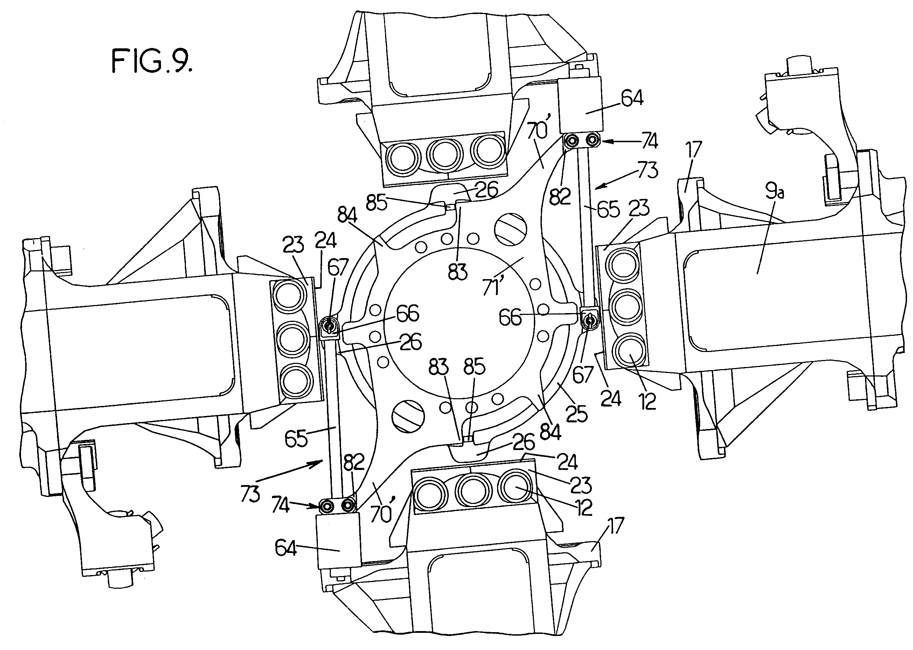

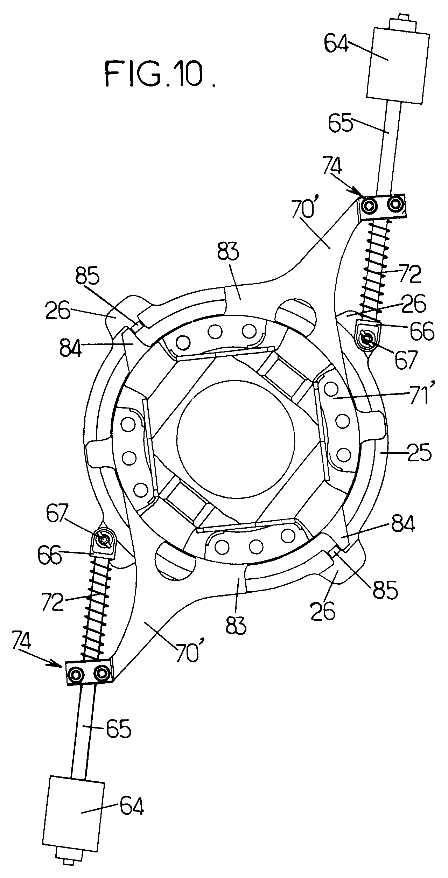

Les figures 9 et 10 représentent respectivement en positions "sol" et "vol" une variante du dispositif des figures 7 et 8, qui ne s'en distingue que par la réalisation des moyens de liaison glissante et pivotante constitués par la rotule 68 dans l'oeil à rotule 69 dans l'exemple des figures 7 et 8.

Sur les figures 9 et 10, on retrouve donc, dans chacun des deux mécanismes d'escamotage 73, une masselotte 64 à une extrémité d'une bielle coulissante 65 pivotée par son embout 66 à son extrémité opposée sur un pivot 67 fixé sur une butée haute 26 de l'anneau rotatif 25. On retrouve également un ressort hélicoïdal de compression 72 (non représenté sur la figure 9, mais montré sur la figure 10) enroulé autour de la partie de bielle coulissante 65 entre l'embout 66 de cette dernière et la liaison glissante et pivotante 74 fixée à l'extrémité radiale externe d'un bras radial 70' de la plaque 71' retenant, comme dans les exemples précédents, l'anneau 25 sur son support 28 sur le moyeu.

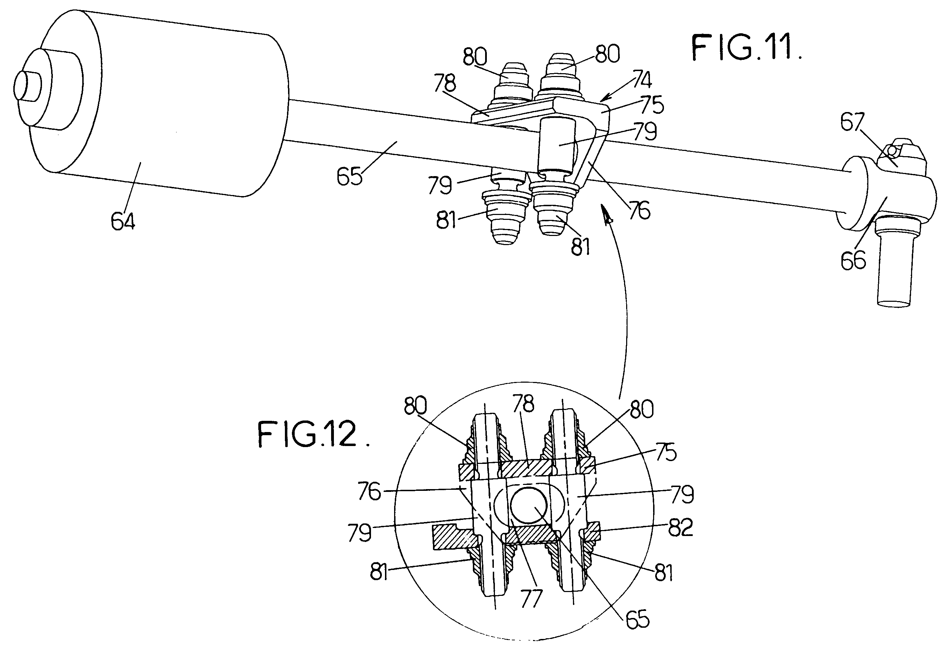

La structure de la liaison glissante et pivotante 74 ainsi que sa coopération avec la bielle coulissante 65 sont représentées sur les figures 11 et 12. Cette liaison 74 est assurée à l'aide d'une équerre 75 en acier dont une aile trapézoïdale 76 présente une lumière oblongue 77 de grand axe sensiblement parallèle à l'autre aile 78 rectangulaire de l'équerre 75. La bielle 65 traverse la lumière 77 avec du jeu selon le petit axe de cette dernière et avec un jeu bien supérieur selon le grand axe, autorisant les pivotements relatifs de la bielle 65 et de l'équerre 75 aux passages de l'une à l'autre des positions "sol" et "vol". La bielle 65 passe non seulement entre les deux flancs rectilignes opposés (horizontaux sur la figure 12) de la lumière 77, mais également entre deux cylindres identiques 79, parallèles entre eux et au petit axe de la lumière 77 et fixés par boulonnage en 80 sur l'aile 78 de l'équerre 75 et en 81 sous une patte d'ancrage 82 en aluminium, plane, parallèle à l'aile 78, et solidaire de l'extrémité radiale externe du bras 70'. On obtient ainsi une liaison 74 autorisant les glissements ou coulissements axiaux de la bielle 65 dans la lumière 77 et entre les cylindres 79, et également, avec du jeu, entre l'aile 78 et la patte 82, ainsi que les pivotements de cette bielle 65 par rapport à l'équerre 75, sans avoir aucune pièce mobile ou articulée dans cette liaison 74, de sorte que cette dernière n'est pas sensible au gel, par exemple, qui peut bloquer la rotule 68 de l'exemple précédent dans son oeil 69. La réalisation des figures 9 à 12 est donc plus rustique que les précédentes, tout en étant sans risque de coincement et insensible aux agents climatiques (givrage, vents de sables). De plus, la plaque 71' des figures 9 et 10 présente également, pour chacun des deux mécanismes d'escamotage 73, deux butées radiales de rotation 83 et 84, correspondant respectivement aux butées 47 et 49 du premier exemple, et coopérant avec une butée axiale de rotation 85 de l'anneau rotatif 25, correspondant aux butées 46 et 48 du premier exemple, pour arrêter l'anneau 25 respectivement en positions "sol" (figure 9) et "vol" (figure 10).

Sur la figure 9, les butées hautes 26 de l'anneau rotatif 25 sont représentées en regard de patins d'appui supérieur 23 fixés, comme dans le premier exemple des figures 1 à 4, sur la branche supérieure 9a de la chape interne d'un manchon 5 de liaison à chaque pale, de la même façon que dans le premier exemple, mais le moyeu 1 n'a pas été représenté, car la structure du moyeu pouvant recevoir le dispositif de butées de l'invention n'est pas limitée à celle des figures 1 à 4. Le dispositif de butées de l'invention peut se monter sur tout moyeu articulé.

Dans tous les exemples, le jeu minimum J1 entre les pistes de butée haute telles que 24 sur les figures 2 et 3 et les butées hautes du moyeu 1 est obtenu par interposition des proéminences escamotables 26 de l'anneau rotatif 25 devant ces pistes de butée haute 24.

La traînée étant nulle et le pas des pales quelconque, à l'arrêt du rotor, chaque masse battante repose dans sa position naturelle sur l'anneau réciproque 21, en étant soumise à son moment statique, comme expliqué ci-dessus. La piste de butée basse 20, plane est alors normale au rayon sphérique de cet anneau réciproque 21 au point de contact. Si une pale est sollicitée en trainée, en raison de la rotation de la pale autour de son axe de trainée Z-Z (voir figure 2), le point de contact entre l'anneau réciproque 21 et la piste de butée basse 20 est déplacé et, comme la distance entre le centre Ca de l'anneau réciproque 21 et le centre Cb de l'articulation lamifiée sphérique 10 est invariable, ce déplacement du point de contact entraine un basculement vers le haut de la masse battante autour de son axe de battement Y-Y, et, comme le jeu entre la piste de butées hautes 24 et la butée haute 26 de l'anneau 25 est faible, il se produit rapidement un blocage simultané en battement et en traînée. L'effet de butées mixtes de battement et de traînée procuré par la coopération des butées hautes de l'invention avec des butées basses à anneau réciproque est d'autant plus marqué que le jeu J1 est réduit.

Cette propriété permet d'éviter l'utilisation d'un actionneur ou d'un outillage spécifique de blocage de ces deux mouvements pour effectuer le repliage des pales.

Le dispositif de butées hautes de battement escamotables de l'invention présente donc les avantages suivants:
- il permet d'éviter la présence d'un dispositif électromécanique ou outillage particulier de blocage en battement et en traînée des pales. Tout en gardant les propriétés classiques des butées escamotables de battement, il permet de conserver, rotor à l'arrêt, un jeu minimum en battement, un autoblocage en trainée par l'association avec une butée basse à anneau réciproque, une grande rigidité au contact, avec ou sans choc, du fait de la conception monobloc de l'anneau rotatif, pour encaisser les efforts considérables des masses battantes sur le moyeu, même en présence d'un fort vent et cela plus particulièrement au cours d'un repliage ou d'un déploiement, automatique ou manuel, des pales,
- il évite l'escamotage intempestif des butées hautes au sol, car, lors de mouvements de manche, les pistes de butée haute telles que 24 ne peuvent entraîner en rotation l'anneau 25 dans un sens quelconque, car il en est empêché d'un côté par la butée de rotation correspondante telle que 47 sur la figure 2, et, de l'autre côté, l'effort de frottement de la piste 24 sur l'anneau 25 est inférieur à l'effort de rappel des ressorts ajouté aux efforts de frottement de l'anneau 25 plaqué sur son support 28. D'autre part, dans le cas de mouvements verticaux, les butées escamotables 26 de l'anneau 25 ne sont pas sensibles à l'effort inertiel sur les masselottes d'escamotage,
- il libère un espace utilisable entre le moyeu 1 et les manchons 5 des pales, ou entre les manchons 5 eux-mêmes ou encore au-dessus du moyeu 1, selon les exemples de réalisation. Cet espace peut être nécessaire pour le passage par exemple d'éléments d'un dispositif de dégivrage ou d'actionneurs nécessaires au repliage automatique des pales,
- il respecte l'équilibre du rotor de par sa symétrie totale par rapport à l'axe rotor A-A,
- il diminue de moitié le nombre des pièces par rapport à des montages classiques tels que décrits dans FR 2 434 079,
- il est insensible au phénomène du givrage car, rotor à l'arrêt, le givre éventuellement déposé est brisé par les chocs obtenus, au démarrage, dès les premiers coups des pistes de butée haute 24 contre les proéminences 26 de l'anneau rotatif 25, et, rotor tournant, si l'anneau 25 reste bloqué en position vol, la sécurité n'est pas compromise,
- en cas de rupture en vol d'un ressort de rappel, comme chacun d'eux est dimensionné pour ramener l'anneau rotatif 25 en position sol, pendant la décélération, et en cas de rupture des deux ressorts, comme l'anneau 25 reste escamoté pendant la fin du vol et à l'arrêt, la sécurité en vol n'est pas compromise.

## Revendications

1. Dispositif de butées de battement, pour un rotor principal de giravion, dont chaque pale (3) est rattachée au moyeu (1) du rotor par une partie d'attache (5) reliée au moyeu (1) par des moyens de retenue et d'articulation (10), et comportant, pour chaque pale (3), une butée haute (26), montée mobile sur le moyeu (1) et rappelée par des moyens élastiques (42) en position "sol", dans laquelle chaque butée haute (26) est directement en regard et espacée d'un faible jeu (J1) d'une piste de butée (24) d'un patin d'appui supérieur (23) monté sur la partie d'attache (5) de la pale (3) correspondante, pour limiter les battements vers le haut de la pale (3) par contact de la piste de butée (24) de son patin d'appui supérieur (23) contre la butée haute (26) correspondante aux vitesses de rotation du rotor nulle et inférieures à un seuil, correspondant à une vitesse suffisante pour permettre le contrôle du rotor par les commandes de vol du giravion, et au moins une masselotte (34) montée pivotante sur le moyeu (1) autour d'un axe (39) sensiblement parallèle à l'axe (A-A) du rotor, et mécaniquement reliée à au moins une butée haute (26), de sorte qu'aux vitesses de rotation du rotor supérieures au seuil, chaque masselotte (34) est écartée de l'axe (A-A) du rotor sous l'effet de la force centrifuge qui la sollicite, et les butées hautes (26) sont escamotées, à l'encontre des moyens élastiques de rappel (42), dans une position "vol" telle qu'elles ne sont plus en regard des patins d'appui supérieurs (23) des pales (3), qui ne sont plus limitées en battement vers le haut par les butées hautes (26),
caractérisé en ce que les butées hautes (26) sont chacune en saillie vers l'extérieur sur un anneau (25) commun sensiblement coaxial au moyeu (1) et monté rotatif autour de l'axe (A-A) du rotor sur une partie supérieure du moyeu (1), et chaque masselotte (34) est mécaniquement reliée à l'anneau (25) par des moyens d'entraînement (35, 36) de l'anneau (25) en rotation autour de l'axe (A-A) du rotor, de la position "sol" à la position "vol" des butées hautes (26), lorsqu'elle est écartée de cet axe (A-A) par la force centrifuge, et à l'encontre des moyens élastiques de rappel (42), qui tendent à rappeler l'anneau (25) en position "sol" des butées hautes (26) et chaque masselotte (34) vers l'axe (A-A) du rotor.

2. Dispositif de butées de battement selon la revendication 1, caractérisé en ce que les butées hautes (26) sont constituées par des proéminences, en nombre égal aux pales (3), présentées en saillie par l'anneau rotatif (25) et d'une seule pièce avec lui.

3. Dispositif de butées de battement selon l'une des revendications 1 et 2, caractérisé en ce qu'il comprend au moins deux masselottes (34), des moyens d'entraînement mécanique (35, 36) de l'anneau rotatif (25) par les masselottes (34) et des moyens de rappel élastique (42) de l'anneau (25) et des masselottes (34) qui sont symétriques par rapport à l'axe (A-A) du rotor.

4. Dispositif de butées de battement selon l'une quelconque des revendications 1 à 3, caractérisé en ce que l'anneau rotatif (25) et des moyens de support (28, 31) de l'anneau (25) sur le moyeu (1) présentent chacun, d'une part, l'une respectivement de deux premières butées de rotation (46, 47) coopérant en direction circonférentielle pour arrêter la rotation de l'anneau (25) en position "sol" sous l'action des moyens de rappel élastique (42), et, d'autre part, l'une respectivement de deux secondes butées de rotation (48, 49) coopérant en direction circonférentielle pour arrêter la rotation de l'anneau (25) en position "vol" sous l'action de la force centrifuge sollicitant chaque masselotte (34).

5. Dispositif de butées de battement selon l'une quelconque des revendications 1 à 4, caractérisé en ce que les moyens de rappel élastique comprennent au moins un ressort hélicoïdal (42) reliant un point fixe (43) de l'anneau (25) à un point fixe (44), par rapport au moyeu (1) du rotor, des moyens de support (28, 31) de l'anneau (25) sur le moyeu (1).

6. Dispositif de butées de battement selon l'une des revendications 4 et 5, caractérisé en ce que les moyens de support de l'anneau (25) sur le moyeu (1) comprennent un support (28), de forme générale cylindrique, rapporté sur le dessus du moyeu (1), et l'anneau (25) est maintenu autour d'une portée de rotation (27) ménagée dans la partie supérieure du support (28) entre une plaque (31) amovible fixée sur le support (28) et un épaulement radial (30) de ce dernier, et le support (28) présente entre son épaulement (30) et une partie de liaison au moyeu (1), au moins un bossage (50) en saillie vers l'extérieur et formant une butée haute de battements en vol pour chaque pale (3).

7. Dispositif de butées de battement selon l'une quelconque des revendications 1 à 6, caractérisé en ce que les moyens d'entraînement mécanique (35, 36) reliant chaque masselotte (34) à l'anneau rotatif (25) comprennent un pignon (35) ayant un moyeu (37) sur lequel la masselotte (34) est en porte-à-faux et monté pivotant autour d'un axe de pivot (39) lié à des moyens de support (28, 31) de l'anneau (25) sur le moyeu (1) du rotor, le pignon (35) engrenant avec une denture (36) de l'anneau (25), de sorte que les pivotements de chaque masselotte (34) et du pignon (35) correspondant autour de l'axe de pivot (39) sous l'effet prédominant de la force centrifuge ou des moyens de rappel élastique (42) sont simultanés aux rotations de l'anneau rotatif (25) de la position "sol" vers la position "vol" ou en sens opposé, respectivement.

8. Dispositif de butées de battement selon l'une quelconque des revendications 1 à 6, caractérisé en ce que les moyens d'entraînement mécanique (55) reliant chaque masselotte (54) à l'anneau rotatif (25) comprennent un levier (55) à deux bras (56, 57) articulés l'un sur l'autre par l'une de leurs extrémités (58), et dont un premier bras (56), supportant la masselotte (54) à son extrémité opposée, est monté pivotant entre ses extrémités sur un point fixe (59) des moyens de support (31) de l'anneau (25) sur le moyeu (1), tandis que le second bras (57) est articulé par son extrémité opposée en un point fixe (60) de l'anneau (25), de sorte qu'à tout pivotement du premier bras (56), éloignant ou rapprochant la masselotte (54) de l'axe (A-A) du rotor, il correspond un déplacement du second bras (57) et une rotation de l'anneau (25) sur ses moyens de support (31) sur le moyeu (1), de la position "sol" vers la position "vol" ou en sens opposé, respectivement.

9. Dispositif de butées de battement selon l'une quelconque des revendications 1 à 6, caractérisé en ce que les moyens d'entraînement mécanique (65, 68) reliant chaque masselotte (64) à l'anneau rotatif (25) comprennent une bielle (65) portant la masselotte (64) à une extrémité, et montée pivotante par son extrémité opposée (66) sur un point fixe (67) de l'anneau (25) et coulissante entre ses extrémités dans des moyens (68) de liaison glissante et pivotante à un point fixe (69) des moyens de support (71) de l'anneau (25) sur le moyeu (1), de sorte que tout déplacement de la masselotte (64) sous l'effet de la force centrifuge ou des moyens de rappel élastique (72) entraîne, par traction sur la bielle (65) coulissante et pivotante, une rotation de l'anneau (25) de la position "sol" vers la position "vol" ou dans le sens opposé, respectivement.

10. Dispositif de butées de battement selon la revendication 9, caractérisé en ce que les moyens de rappel élastique comprennent, pour chaque masselotte (64), un ressort hélicoïdal de compression (72) entourant la bielle (65) entre son extrémité (66) pivotant sur l'anneau (25) et lesdits moyens de liaison (68) glissante et pivotante, de manière à prendre appui d'une part sur l'anneau (25) et d'autre part sur ses moyens de support (71) sur le moyeu (1).

11. Dispositif de butées de battement selon l'une des revendications 9 et 10, caractérisé en ce que les moyens de liaison glissante et pivotante comprennent une rotule (68) traversée à coulissement par la bielle (65) et retenue à pivotement dans un oeil à rotule (69) desdits moyens (71, 70) de support de l'anneau (25) sur le moyeu (1).

12. Dispositif de butées de battement selon l'une des revendications 9 et 10, caractérisé en ce que les moyens (74) de liaison glissante et pivotante comprennent une équerre (75) dont une aile (76) présente une lumière oblongue (77), traversée avec du jeu selon les grand et petit axes de la lumière par la bielle (65) passant entre deux cylindres (79) parallèles entre eux et au petit axe de la lumière (77) et retenus d'une part sur l'autre aile (78) de l'équerre (75) et d'autre part sur une patte de fixation (82) desdits moyens de support (70', 71') de l'anneau (25) sur le moyeu (1), ladite patte de fixation (82) étant sensiblement plane et parallèle à l'autre aile de l'équerre, et la bielle (65) passant également avec du jeu entre l'autre aile (78) de l'équerre (75) et la patte de fixation (82).

13. Dispositif de butées de battement selon l'une des revendications 11 et 12, telle que rattachée à la revendication 6, caractérisé en ce que, pour chaque masselotte (64), lesdits moyens (68, 74) de liaison glissante et pivotante sont portés à l'extrémité radiale externe d'un bras (70, 70') de la plaque de retenue (71, 71') de l'anneau (25) sur son support (28), et l'extrémité pivotante de la bielle (65) est munie d'un embout à oeil (66) monté pivotant sur un axe de pivot (67) fixé sur une butée haute (26) de l'anneau (25).

14. Dispositif de butées de battement selon l'une quelconque des revendications 1 à 13, caractérisé en ce qu'il comprend également un mécanisme de butées basses de battement comportant, pour toutes les pales (3), une butée inférieure commune du type à anneau réciproque (21) monté radialement mobile autour d'un arbre (2) du rotor, sous le moyeu (1) dont l'arbre (2) est solidaire en rotation, et, pour chaque pale (3), un patin d'appui inférieur (17) solidaire de la partie d'attache (5) de la pale (3) au moyeu (1), et présentant une piste de butée (20) par laquelle le patin d'appui inférieur (17) vient en contact avec l'anneau réciproque (21) aux vitesses de rotation nulle et faibles du rotor.

15. Tête de rotor de giravion, comprenant un moyeu (1) de rotor solidaire en rotation d'un mât rotor (2) autour d'un axe (A-A) de rotation du rotor, et auquel chacune des pales (3) du rotor est reliée par une partie d'attache (5) fourchue (9) à deux branches (9a, 9b), et par des moyens (10) de retenue et d'articulation sur le moyeu (1) qui comprennent une armature radiale externe (10b) fixée sur le moyeu (1), et une armature radiale interne (10c) fixée (12) aux extrémités radiales internes des deux branches (9a, 9b) de la partie d'attache fourchue (5) correspondante, caractérisée en ce qu'elle comprend un dispositif de butées selon l'une des revendications 1 à 14 précédentes, et, pour chaque pale (3), des moyens de retenue et d'articulation comportant une butée lamifiée sphérique (10a) intégrée entre les deux armatures (10b, 10c) correspondantes et logée entre les deux branches (9a, 9b) de la partie d'attache fourchue (5) correspondante, de sorte que son centre de rotation (Cb) soit sensiblement situé du côté de l'armature radiale externe (10b), ladite partie d'attache fourchue (5) de chaque pale (3) étant un organe de liaison sensiblement radial, tel qu'un manchon, conformé à son extrémité radiale interne en chape (9) dont les deux branches (9a, 9b) sont fixées à l'armature radiale interne (10c) des moyens de retenue et d'articulation (10) correspondants, et conformé à son extrémité radiale externe en chape (6) de fixation au pied (7) de la pale (3) correspondante par deux axes (8) sensiblement parallèles à l'axe de rotation (A-A) du rotor, et dont l'un est éventuellement amovible afin de permettre le repliage de la pale (3) par pivotement autour de l'autre axe (8).

## Claims

1. Flap stops device, for a rotorcraft main rotor, in which each blade (3) is attached to the hub (1) of the rotor by an attachment part (5) joined to the hub (1) by holding and articulating means (10), and including, for each blade (3), an upper stop (26) mounted so that it can move on the hub (1) and returned by elastic means (42) to the "ground" position, in which each upper stop (26) is directly facing and a small clearance (J1) away from a stop track (24) of an upper bearing shoe (23) mounted on the attachment part (5) of the corresponding blade (3) so as to limit the upwards flapping of the blade (3) by means of contact of the stop track (24) of its upper bearing shoe (23) against the corresponding upper stop (26) at rotational speeds of the rotor which are zero and below a threshold corresponding to a speed which is sufficient to allow the rotor to be controlled using the flight controls of the rotorcraft, and at least one flyweight (34) mounted so that it can pivot on the hub (1) about a pin (39) substantially parallel to the axis (A-A) of the rotor and mechanically joined to at least one anti-cone stop (26), so that at rotational speeds of the rotor which are greater than the threshold, each fly-weight (34) is moved away from the axis (A-A) of the rotor under the effect of centrifugal force acting upon it, and the anti-cone stops (26) are retracted against elastic return means (42) into a "flight" position such that they no longer face the upper bearing shoes (23) of the blades (3) which are no longer limited in terms of upwards flapping by the anti-cone stops (26), characterized in that the anti-cone stops (26) each project outwards from a common ring (25) substantially coaxial with the hub (1) and mounted so it can rotate about the axis (A-A) of the rotor on an upper part of the hub (1), and each flyweight (34) is mechanically joined to the ring (25) by means (35, 36) for driving the ring (25) in rotation about the axis (A-A) of the rotor, from the "ground" to the "flight" position of the anti-cone stops (26) when it is moved away from this axis (A-A) by centrifugal force, and against the elastic return means (42) which tend to return the ring (25) to the "ground" position of the anti-cone stops (26) and each flyweight (34) towards the axis (A-A) of the rotor.

2. Flap stops device according to Claim 1, characterized in that the anti-cone stops (26) consist of protrusions, equal in number to the blades (3), in the form of projections from the rotary ring (25) and integral with it.

3. Flap stops device according to one of Claims 1 and 2, characterized in that it comprises at least two flyweights (34), means (35, 36) for the mechanical drive of the rotary ring (25) by the flyweights (34) and means (42) for elastic return of the ring (25) and of the flyweights (34) which means are symmetric with respect to the axis (A-A) of the rotor.

4. Flap stops device according to any one of Claims 1 to 3, characterized in that the rotary ring (25) and the means (28, 31) for supporting the ring (25) on the hub (1) each display, on the one hand, respectively one of two first rotation stops (46, 47) interacting in the circumferential direction to halt the rotation of the ring (25) in the "ground" position under the action of the elastic return means (42) and, on the other hand, respectively one of two second rotation stops (48, 49) interacting in the circumferential direction to halt the rotation of the ring (25) in the "flight" position under the action of centrifugal force acting on each flyweight (34).

5. Flap stops device according to any one of Claims 1 to 4, characterized in that the elastic return means comprise at least one helical spring (42) joining a fixed point (43) of the ring (25) to a point (44), which is fixed with respect to the hub (1) of the rotor, of the means (28, 31) for supporting the ring (25) on the hub (1).

6. Flap stops device according to one of Claims 4 and 5, characterized in that the means for supporting the ring (25) on the hub (1) comprise a support (28) of cylindrical overall shape, attached to the top face of the hub (1), and the ring (25) is kept around a rotation bearing surface (27) formed in the upper part of the support (28) between a removable plate (31) fixed to the support (28) and a radial shoulder (30) thereof, and the support (28), between its shoulder (30) and a part for linking to the hub (1), displays at least one boss (50) projecting outwards and forming a flight anti-cone stop for each blade (3).

7. Flap stops device according to any one of Claims 1 to 6, characterized in that the mechanical drive means (35, 36) joining each flyweight (34) to the rotary ring (25) comprise a pinion (35) having a hub (37) from which the flyweight (34) overhangs, and which is mounted so that it can pivot about a pivot pin (39) linked to means (28, 31) for supporting the ring (25) on the hub (1) of the rotor, the pinion (35) meshing with toothing (36) of the ring (25), so that the pivoting of each flyweight (34) and of the corresponding pinion (35) about the pivot pin (39) under the predominant effect of centrifugal force or of the elastic return means (42) are simultaneous with the rotations of the rotary ring (25) from the "ground" position to the "flight" position or in the opposite direction, respectively.

8. Flap stops device according to any one of Claims 1 to 6, characterized in that the mechanical drive means (55) joining each flyweight (54) to the rotary ring (25) comprise a lever (55) with two arms (56, 57) articulated together via one of their ends (58), and of which a first arm (56), supporting the flyweight (54) at its opposite end, is mounted so that it can pivot between its ends on a fixed point (59) of the means (31) for supporting the ring (25) on the hub (1), while the second arm (57) is articulated by its opposite end at a fixed point (60) of the ring (25) so that a movement of the second arm (57) and a rotation of the ring (25) on its means (31) for support on the hub (1) from the "ground" position to the "flight" position, or in the opposite direction, corresponds to a pivoting of the first arm (56) moving the flyweight (54) respectively away from or towards the axis (A-A) of the rotor.

9. Flap stops device according to any one of Claims 1 to 6, characterized in that the mechanical drive means (65, 68) joining each flyweight (64) to the rotary ring (25) comprise a rod (65) carrying the flyweight (64) at one end, and mounted so that it can pivot via its opposite end (66) on a fixed point (67) of the ring (25) and so that it can slide between its ends in means (68) forming a gliding link pivoting at a fixed point (69) of the means (71) for supporting the ring (25) on the hub (1), so that any movement of the flyweight (64) under the effect of centrifugal force or of the elastic return means (72) leads, by pulling on the sliding and pivoting rod (65), to a rotation of the ring (25) from the "ground" position to the "flight" position or in the opposite direction, respectively.

10. Flap stops device according to Claim 9, characterized in that the elastic return means comprise, for each flyweight (64), a helical compression spring (72) surrounding the rod (65) between its end (66) pivoting on the ring (25) and the said gliding and pivoting link means (68), so as to bear, on the one hand, on the ring (25) and, on the other hand, on its means (71) for support on the hub (1).

11. Flap stops device according to one of Claims 9 and 10, characterized in that the gliding and pivoting link means comprise a ball joint (68) through which the rod (65) passes in a sliding manner, and which is held in pivoting fashion in a ball joint socket (69) of the said means (71, 70) for supporting the ring (25) on the hub (1).

12. Flap stops device according to one of Claims 9 and 10, characterized in that the gliding and pivoting link means (74) comprise an angle bracket (75), one leg (76) of which exhibits an oblong slot (77) through which there passes, with clearance along the major and minor axes of the slot, the rod (65) passing between two mutually parallel cylinders (79) parallel to the minor axis of the slot (77) and held, on the one hand, on the other leg (78) of the angle bracket (75) and, on the other hand, on a lug (82) for fastening the said means (70', 71') for supporting the ring (25) on the hub (1), the said fixing lug (82) being substantially flat and parallel to the other leg of the angle bracket, and the rod (65) also passing with clearance between the other leg (78) of the angle bracket (75) and the fixing lug (82).

13. Flap stops device according to one of Claims 11 and 12, as attached to Claim 6, characterized in that, for each flyweight (64), the said gliding and pivoting link means (68, 74) are carried at the outer radial end of an arm (70, 70') of the plate (71, 71') for holding the ring (25) on its support (28), and the pivoting end of the rod (65) is fitted with a socket end fitting (66) mounted so that it can pivot on a pivot pin (67) fixed to an anti-cone stop (26) of the ring (25).

14. Flap stops device according to any one of Claims 1 to 13, characterized in that it also comprises a droop restrainer stops mechanism including, for all the blades (3), a common lower stop of the droop restrainer ring type (21) mounted so that it can move radially about a shaft (2) of the rotor, beneath the hub (1), the shaft (2) of which is rotationally secured, and, for each blade (3), a lower bearing shoe (17) secured to the part (5) for attaching the blade (3) to the hub (1) and displaying a stop track (20) by means of which the lower bearing shoe (17) comes into contact with the droop restrainer ring (21) at zero and low rotational speeds of the rotor.

15. Rotorcraft rotor head, comprising a rotor hub (1) secured in terms of rotation to a rotor mast (2) about an axis (A-A) of rotation of the rotor, and to which each of the blades (3) of the rotor is joined by an attachment part (5) which is forked (9) and has two branches (9a, 9b), and by means (10) for holding and articulating on the hub (1) which comprise an outer radial armature (10b) fixed to the hub (1), and an inner radial armature (10c) fixed (12) to the inner radial ends of the two branches (9a, 9b) of the corresponding forked attachment part (5), characterized in that this rotor head comprises a stops device according to any one of the preceding Claims 1 to 14, and, for each blade (3), holding and articulating means including a laminated spherical stop (10a) incorporated between the two corresponding armatures (10b, 10c) and housed between the two branches (9a, 9b) of the corresponding forked attachment part (5), so that its centre of rotation (Cb) is substantially situated on the same side as the outer radial armature (10b), the said forked attachment part (5) of each blade (3) being a substantially radial linking member such as a sleeve shaped at its inner radial end into a clevis (9), the two branches (9a, 9b) of which are fixed to the inner radial armature (10c) of the corresponding holding and articulating means (10), and shaped at its outer radial end as a clevis (6) for fixing to the root (7) of the corresponding blade (3) using two pins (8) substantially parallel to the axis of rotation (A-A) of the rotor, and one of which is optionally removable in order to allow the blade (3) to be folded back by pivoting about the other pin (8).

## Patentansprüche

1. Schlagbegrenzungsanschlagvorrichtung für einen Drehflüglerhauptrotor, bei dem jedes Blatt (3) an die Nabe (1) des Rotors durch ein Ansetzteil (5) angesetzt ist, das mit der Nabe (1) über Halte- und Gelenkmittel (10) verbunden ist und für jedes Blatt (3) einen oberen Begrenzungsanschlag (26), der beweglich an der Nabe (1) angebracht ist und durch elastische Mittel (42) in die Position "Boden" rückgestellt wird, in welcher jeder obere Begrenzungsanschlag (26) einer Begrenzungsbahn (24) eines oberen, am Ansetzteil (5) des entsprechenden Blattes (3) angebrachten Stützschuhs (23) direkt gegenübersteht und davon mit einem geringen Spiel (J1) beabstandet ist, um das Schlagen des Blattes (3) nach oben durch Berührung der Begrenzungsbahn (24) ihres oberen Stützschuhs (23) gegen den entsprechenden oberen Begrenzungsanschlag (26) bei Rotordrehgeschwindigkeiten von null und geringer als ein Schwellenwert zu begrenzen, der einer ausreichenden Geschwindigkeit entspricht, um die Steuerung des Rotors durch die Flugbefehle des Drehflüglers zu ermöglichen, und wenigstens einen Aufsatz (34) aufweist, der an der Nabe (1) um eine zur Rotorachse (A-A) im wesentlichen parallel verlaufende Achse (39) schwenkbar angebracht ist und mit wenigstens einem oberen Begrenzungsanschlag (26) mechanisch verbunden ist, so daß bei den Schwellenwert überschreitenden Drehgeschwindigkeiten des Rotors jeder Aufsatz (34) zur Achse (A-A) des Rotors unter der Einwirkung der ihn beanspruchenden Zentrifugalkraft einen Abstand hat und die oberen Begrenzungsanschläge (26) entgegen elastischen Rückstellmitteln (42) in eine Position "Flug" eingefahren sind, so daß sie nicht mehr gegenüber den oberen Abstützschuhen (23) der Blätter (3) stehen, die nicht mehr nach oben durch die oberen Begrenzungsanschläge (26) schlagbegrenzt sind, **dadurch gekennzeichnet**, daß die oberen Begrenzungsanschläge (26) jeweils nach außen von einem gemeinsamen Ring (25) hervorstehen, der mit der Nabe (1) im wesentlichen koaxial und um die Rotorachse (A-A) in einem Bereich oberhalb der Nabe (1) drehbar angebracht ist, und jeder Aufsatz (34) mit dem Ring (25) durch Mittel (35, 36) zum Antrieb des Ringes (25) bei Drehung um die Achse (A-A) des Rotors von der Position "Boden" in die Position "Flug" der oberen Begrenzungsanschläge (26) mechanisch verbunden wird, wenn er von dieser Achse (A-A) aufgrund der Zentrifugalkraft einen Abstand hat, und entgegen den elastischen Rückstellmitteln (42), die das Bestreben haben, den Ring (25) in die Position "Boden" der oberen Begrenzungsanschläge (26) und jeden Aufsatz (34) zur Achse (A-A) des Rotors hin rückzustellen.

2. Schlagbegrenzungsanschlagvorrichtung nach Anspruch 1, **dadurch gekennzeichnet**, daß die oberen Begrenzungsanschläge (26) durch in ihrer Anzahl der Anzahl der Blätter (3) entsprechende Vorsprünge gebildet sind, die vom drehbaren Ring (25) hervorspringend ausgebildet sind und mit diesem ein einziges Teil bilden.

3. Schlagbegrenzungsanschlagvorrichtung nach einem der Ansprüche 1 und 2, **dadurch gekennzeichnet**, daß sie wenigstens zwei Aufsätze (34), Mittel (35, 36) zum mechanischen Antrieb des drehbaren Ringes (25) durch die Aufsätze (34) und Mittel (42) zum elastischen Rückstellen des Ringes (25) und der Aufsätze (34) enthält, die symmetrisch in bezug auf die Achse (A-A) des Rotors sind.

4. Schlagbegrenzungsanschlagvorrichtung nach einem der Ansprüche 1 bis 3, **dadurch gekennzeichnet**, daß der drehbare Ring (25) und Abstützmittel (28, 31) des Ringes (25) an der Nabe (1) jeweils zum einen einen von zwei ersten Drehbegrenzungsanschlägen (46, 47), die in Umfangsrichtung zusammenwirken, um die Drehung des Ringes (25) in der Position 〈〈 Boden 〉〉 unter Einwirkung der Mittel (42) zum elastischen Rückhalten anzuhalten, und zum anderen einen von zwei zweiten Drehbegrenzungsanschlägen (48, 49) aufweisen, die in Umfangsrichtung zusammenwirken, um die Drehung des Ringes (25) in der Position "Flug" unter Einwirkung der jeden Aufsatz (34) beanspruchenden Zentrifugalkraft anzuhalten.

5. Schlagbegrenzungsanschlagvorrichtung nach einem der Ansprüche 1 bis 4, **dadurch gekennzeichnet**, daß die Mittel zum elastischen Rückhalten wenigstens eine Schraubenfeder (42) enthalten, die einen Festpunkt (43) des Ringes (25) mit einem in bezug auf die Nabe (1) des Rotors festen Punkt (44) der Abstützmittel (28, 31) des Ringes (25) an der Nabe (1) verbinden.

6. Schlagbegrenzungsanschlagvorrichtung nach einem der Ansprüche 4 und 5, **dadurch gekennzeichnet**, daß die Abstützmittel des Ringes (25) an der Nabe (1) eine Stütze (28) von allgemeiner zylindrischer Form aufweisen, die auf der Oberseite der Nabe (1) aufgebaut ist, und der Ring (25) um eine Drehfläche (27) gehalten ist, die im oberen Teil der Abstützung (28) zwischen einer auf der Abstützung befestigten, entfernbaren Platte (31) und einer radialen Schulter (30) der letzteren angebracht ist, und die Abstützung (28) zwischen ihrer Schulter (30) und einem Verbindungsteil zur Nabe (1) zumindest einen Höcker (50) aufweist, der nach außen vorsteht und einen oberen Schlagbegrenzungsanschlag beim Flug für jedes Blatt (3) bildet.

7. Schlagbegrenzungsanschlagvorrichtung nach einem der Ansprüche 1 bis 6, **dadurch gekennzeichnet**, daß die jeden Aufsatz (34) mit dem drehbaren Ring (25) verbindenden Mittel (35, 36) zum mechanischen Antrieb ein Ritzel (35) enthalten, das eine Nabe (37) hat, an der der Aufsatz (34) einseitig befestigt und die schwenkbar um eine Schwenkachse (39) angebracht ist, die mit Abstützmitteln (28, 31) des Ringes (25) an der Nabe (1) des Rotors verbunden ist, wobei das Ritzel (35) mit einer Zahnung (36) des Ringes (25) in Eingriff steht, so daß die Schwenkungen jedes Aufsatzes (34) und des entsprechenden Ritzels (35) um die Schwenkachse (39) unter der vorherrschenden Einwirkung der Zentrifugalkraft oder der Mittel (42) zum elastischen Rückhalten bei Drehungen des drehbaren Ringes (25) von der Position "Boden" in die Position "Flug" oder in der jeweils entgegengesetzten Richtung gleichzeitig sind.

8. Schlagbegrenzungsanschlagvorrichtung nach einem der AnSprüche 1 bis 6, **dadurch gekennzeichnet**, daß die jeden Aufsatz (54) mit dem drehbaren Ring (25) verbindenden Mittel (55) zum mechanischen Antrieb einen Hebel (55) mit zwei Armen (56, 57) aufweisen, die miteinander an einem ihrer Enden (58) gelenkig verbunden sind und von denen ein erster, den Aufsatz (54) an seinem entgegengesetzten Ende tragender Arm (56) zwischen seinen Enden an einem Festpunkt (59) der Abstützmittel (31) des Ringes (25) an der Nabe (1) schwenkbar angebracht ist, wogegen der zweite Arm (57) über sein entgegengesetztes Ende bei einem Festpunkt (60) des Ringes (25) angelenkt ist, so daß es bei jeglicher, den Aufsatz (54) von der Achse (A-A) des Rotors entfernender oder annähernder Schwenkung des ersten Armes (56) zu einer Verschiebung des zweiten Armes (57) und einer Drehung des Ringes (25) auf seinen Abstützmitteln (31) an der Nabe (1) von der Position "Boden" zur Position "Flug" oder in der jeweils umgekehrten Richtung kommt.

9. Schlagbegrenzungsanschlagvorrichtung nach einem der Ansprüche 1 bis 6, **dadurch gekennzeichnet**, daß die jeden Aufsatz (64) mit dem drehbaren Ring (25) verbindenden Mittel (65, 68) zum mechanischen Antrieb eine Stange (65) enthalten, die den Aufsatz (64) an einem Ende trägt und mit ihrem entgegengesetzten Ende (66) an einem Festpunkt (67) des Ringes (25) schwenkbar angebracht ist und zwischen ihren Enden verschiebbar in Mitteln (68) zur gleitenden und schwenkbaren Verbindung an einem Festpunkt (69) der Abstützmittel (71) des Ringes (25) an der Nabe (1) ist, so daß jegliche Verschiebung des Aufsatzes (64) unter Einwirkung der Zentrifugalkraft oder der Mittel (72) zum elastischen Rückstellen durch Zug über die sich verschiebende und schwenkende Stange (65) eine Drehung des Ringes (25) von der Position "Boden" zur Position "Flug" oder in der jeweils umgekehrten Richtung hervorruft.

10. Schlagbegrenzungsanschlagvorrichtung nach Anspruch 9, **dadurch gekennzeichnet**, daß die Mittel zum elastischen Rückstellen für jeden Aufsatz (64) eine Druckschraubenfeder (72) enthalten, welche die Stange (65) zwischen ihrem am Ring (25) schwenkbaren Ende (66) und den Mitteln (68) zur gleitenden und schwenkbaren Verbindung umgibt, um einerseits am Ring (25) und andererseits an ihren Abstützmitteln (71) an der Nabe (1) zur Anlage zu kommen.

11. Schlagbegrenzungsanschlagvorrichtung nach einem der Ansprüche 9 und 10, **dadurch gekennzeichnet**, daß die Mittel zur gleitenden und schwenkbaren Verbindung einen Kugelkopf (68) aufweisen, der von der Stange (65) unter Verschiebbarkeit durchlaufen ist und der bei Schwenkbarkeit in einem Kugelkopfauge (69) von den Mitteln (71, 70) zum Abstützen des Ringes (25) an der Nabe (1) gehalten ist.

12. Schlagbegrenzungsanschlagvorrichtung nach einem der Ansprüche 9 und 10, **dadurch gekennzeichnet**, daß die Mittel (74) zur gleitenden und schwenkbaren Verbindung einen Winkel (75) enthalten, dessen einer Schenkel (76) ein Langloch (77) aufweist, das mit Spiel entlang der großen und der kleinen Achse des Langloches von der Stange (65) durchlaufen wird, die zwischen zwei zueinander und zur kleinen Achse des Langloches (77) parallel verlaufenden Zylindern (79) durchläuft und einerseits am anderen Schenkel (78) des Winkels (75) und andererseits an einem Befestigungsfuß (82) der Mittel (70', 71') zur Abstützung des Ringes (25) an der Nabe (1) gehalten ist, wobei der Befestigungsfuß (82) im wesentlichen eben und parallel zum anderen Schenkel des Winkels ist und die Stange (65) auch mit Spiel zwischen dem anderen Schenkel (78) des Winkels (75) und dem Befestigungsfuß (82) durchläuft.

13. Schlagbegrenzungsanschlagvorrichtung nach einem der Ansprüche 11 und 12, in Anlehnung an den Anspruch 6, **dadurch gekennzeichnet**, daß für jeden Aufsatz (64) die Mittel (68, 74) zur gleitenden und schwenkbaren Verbindung am äußeren radialen Ende eines Armes (70, 70') der Platte (71, 71') zum Halten des Ringes (25) an seiner Abstützung (28) getragen werden und das schwenkbare Ende der Stange (65) mit einem Augenansatz (66) versehen ist, der schwenkbar an einer an einem oberen Begrenzungsanschlag (26) des Ringes (25) befestigten Schwenkachse (67) angebracht ist.

14. Schlagbegrenzungsanschlagvorrichtung nach einem der Ansprüche 1 bis 13, **dadurch gekennzeichnet**, daß sie auch einen Mechanismus mit unteren Schlagbegrenzungsanschlägen, die für alle Blätter (3) einen gemeinsamen unteren Begrenzungsanschlag vom Typ des reziproken Ringes (21) aufweisen, der radial beweglich um eine Rotorwelle (2) unter der Nabe (1) angebracht ist, wobei die Welle (2) drehungsvereint ist, und für jedes Blatt (3) einen unteren Stützschuh (17) enthält, der mit dem Ansetzteil (5) des Blattes (3) an der Nabe (1) vereint ist und eine Anschlagbahn (20) aufweist, durch welche der untere Stützschuh (17) mit dem reziproken Ring (21) bei Drehgeschwindigkeiten des Rotors von null und bei geringen Rotordrehgeschwindigkeiten in Berührung kommt.

15. Drehflüglerrotorkopf mit einer mit einem Rotorschaft (2) bei Drehung um eine Rotationsachse (A-A) des Rotors vereinten Rotornabe (1), an die jedes der Blätter (3) des Rotors mit einem in zwei Arme (9a, 9b) gegabelten (9) Ansetzteil (5) und mit Mitteln (10) zum Halten und gelenkigen Anbringen an der Nabe (1) angeschlossen ist, die einen äußeren, radialen, an der Nabe (1) befestigten Beschlag (10b) und einen inneren, radialen, an den inneren radialen Enden der beiden Arme (9a, 9b) des entsprechenden gegabelten Ansetzteils (5) befestigten (12) Beschlag (10c) aufweisen, **dadurch gekennzeichnet**, daß er eine Begrenzungsanschlagvorrichtung nach einem der vorhergehenden Ansprüche 1 bis 14 enthält und für jedes Blatt (3) Mittel zum Halten und zum gelenkigen Anbringen enthält, die einen kugelförmigen, geblätterten Anschlag (10a) aufweist, der zwischen den beiden entsprechenden Beschlägen (10b, 10c) integriert und zwischen den beiden Armen (9a, 9b) des entsprechenden gegabelten Ansetzteils (5) untergebracht ist, so daß sein Rotationszentrum (Cb) im wesentlichen auf seiten des äußeren radialen Beschlags (10b) liegt, wobei das gegabelte Ansetzteil (5) jedes Blattes (3) ein im wesentlichen radiales Verbindungsorgan wie z.B. eine Muffe ist, das an seinem inneren radialen Ende als Abdeckung (9) gestaltet ist, deren zwei Arme (9a, 9b) am inneren radialen Beschlag (10c) der entsprechenden Halte- und Gelenkmittel (10) befestigt sind und an seinem äußeren radialen Ende als Abdeckung (6) zur Befestigung am Fuß (7) des entsprechenden Blattes (3) über zwei zur Rotationsachse (A-A) des Rotors im wesentlichen parallel verlaufende Achsen (8) gestaltet sind, von denen die eine möglicherweise lösbar ist, um die Abklappbarkeit des Blattes (3) durch Schwenkung um die andere Achse (8) zu ermöglichen.
